# EUROPEAN PATENT SPECIFICATION

(11) **EP 1 598 313 B1**
(45) Date of publication and mention of the grant of the patent: **27.07.2011**
(21) Application number: 05076147.7
(22) Date of filing: 17.05.2005
(51) Int. Cl.: C01B 33/44, C08K 3/34, C08K 7/04, C08K 9/08

(54) **Nanocomposite material**
Nanokompositmaterial
Matériau nanocomposite

(30) Priority: 18.05.2004 US 848282
(43) Date of publication of application: 23.11.2005
(73) Proprietor: Nederlandse Organisatie voor Toegepast -Natuurwetenschappelijk Onderzoek TNO, 2628 VK Delft (NL)
(72) Inventor: Fischer, Harmut Rudolf, 5731 TP Mierlo (NL)
(74) Representative: Winckels, Johannes Hubertus F.

(56) References cited:
- EP-A- 1 167 430
- WO-A-00/78540
- WO-A-99/41299
- WO-A-03/055792
- DATABASE CA [Online] CHEMICAL ABSTRACTS SERVICE, COLUMBUS, OHIO, US; 13 September 2000 (2000-09-13), SANO, NAOYA ET AL: "Hot-melt adhesive compositions for bonding plastics and metals" XP002334064 retrieved from STN Database accession no. 2000:635094 -& JP 2000 248251 A (KONISHI K. K., JAPAN) 12 September 2000 (2000-09-12)

## Description

The invention relates to a nanocomposite material, and to a process for the preparation thereof.

In the past decades, it has already often been proposed to improve the properties of polymeric materials by including in these materials a specific amount of a clay. The presence of a clay in a polymeric material particularly contributes to properties such as the mechanical strength and the heat resistance of the polymeric material.

A greet difficulty when including a clay in a polymeric matrix resides in the mutually rather different nature of the materials. The polymeric material of the matrix is a usually non-polar organic material, whereas the clay is a much more polar inorganic material. Because of this difference the materials are poorly intermixable; they are intrinsically not mixable.

To circumvent this difficulty, it has been proposed to carry out the synthesis of the polymer that forms the matrix, a polymerization reaction, in the presence of the inorganic material. The idea was that the clay is perhaps more easily intermixable with a monomeric material than with a polymeric material. This method, however, proved to result in an inhomogeneous product which does not have the desired properties. The clay has a layered or fibrous structure which cannot be broken easily, so that a homogeneous mixing is hard to obtain.

U.S. patents 4,889,885 and 4,810,734 propose to first swell the clay before adding monomeric material and carrying out a polymerization. To this end, the clay is modified with a swelling agent which increases the mutual distance between the layers of the clay structure to such an extent that monomers fit there between. After polymerization of the monomers polymeric material is then automatically located between the clay layers.

The swelling agent described in the above patents is so-called onium ions. Within this context an onium ion is a surfactant with a head group formed by an ammonium, pyridinium, sulfonium or phosphonium group, and one or more non-polar tails. The cationic head group of an onium ion is exchanged for cations between the crystalline layers of the clay. The tails must have a functional group capable of entering into a bonding interaction with the monomeric material, so that the polymers are formed between the layers of the clay.

Nevertheless, swelling with an onium ion also often proved ineffective in obtaining a proper mixing of the clay with a polymeric matrix. European patent application 0 747 322 describes that even when an onium ion with two non-polar tails is used, additional measures are necessary to homogeneously disperse a clay in a polymeric matrix which particularly consists of rubbery materials. Accordingly, the above European patent application proposes to introduce, in addition to an onium ion with two non-polar tails, one or more host molecules, also surfactant-like molecules, between the clay layers. A drawback of this method is that it is very complicated and does not in all polymeric materials enable a homogeneous dispersion of clay in the polymeric matrix.

Another approach is described in U.S. patent 6,578,672. This approach comprises two steps. In the first step, an aqueous layered clay is swollen with monomers, oligomers or polymers that are compatible with water. This leads to a partly hydrophilic material. This first step is often referred to as the so-called intercalation. The distance between the clay layers is thereby increased. The second step comprises the mixing of the intercalated clay with a second polymer. This step is referred to as the so-called exfoliation and must lead to loose individual clay plates. The resulting product is finally included in the desired polymeric matrix through extrusion. In this procedure it is essential that the clay contains a specific minimum content (usually at least 5%) of water. The method described in this U.S. patent is rather laborious and complicated. Moreover, this method is not applicable to many polymeric matrices, so that a clay cannot be included in every polymeric material.

The international patent application WO-A-93/04118 describes a composite material on the basis of a polymeric matrix and a clay, which clay is modified with a specific compound. This specific compound consists of a silane or an onium group and a group compatible with the polymeric matrix. It has turned out that with this specific compound a substantial dispersion of a clay in a polymeric matrix is only obtainable with nylon as polymeric matrix.

EP-A-1167 430 describes a reinforced filter material in which a nanocomposite is used that comprises a polymeric matrix into which a clay and a block copolymer or a graft copolymer have been incorporated. Fibrous clays are not mentioned.

WO-A-00/78540 describes nanocomposites that include at least one type of inorganic layered silicate and at least one type of organophilic agent. These nanocomposites are said to have high thermal stability.

WO-A-99/41299 describes nanocomposite compositions of a polyamide and a treated silicate. The polyamides are homo- or copolymers, but not graft- or block copolymers.

It is an object of the invention to provide a nanocomposite material in which a clay is very homogeneously dispersed in a polymeric matrix, which nanocomposite material is easy to prepare. The invention therefore relates to a nanocomposite material as defined in claim 1.

It has been found that by using a block copolymer or graft copolymer as defined in claim 1 a clay can be very homogeneously mixed with a polymeric matrix. Moreover, by suitably selecting the structural units of the block copolymer or the graft copolymer a clay can be included in a polymeric matrix selected from the group consisting of polyolefins, vinyl polymers, polyesters, polyethers, polysiloxanes and acrylic polymers . A nanocomposite material according to the invention has very favorable properties, such as a great heat resistance, a great mechanical strength, in particular a great tensile strength and a good impact resistance, a low electric conductivity, a high glass transition temperature and a very low permeability to gases, such as oxygen or water vapor, and liquids, such as water or solvents.

A nanocomposite material according to the invention ie, as stated before, based on a clay having a fibrous structure. When compared to other clays, typically of a layered structure, it has been found that with a fibrous clay it is easier to prepare a nanocomposite material of a highly homogeneous composition. In addition, a nanocomposite material based on a fibrous clay has highly advantageous mechanical properties.

The clay may be of a natural or synthetic nature. Preferably, the clay has a large contact surface. Very suitable are fibrous clays such as sepioloite, attapulgite and palygorskite. These materials impart very favorable mechanical properties and a great heat resistance to a nanocomposite material

The clay has a cation exchange capacity of from 5 to 250 milliequivelents per 100 gram. In a preferred embodiment, the clay is a fibrous clay having a cation exchange capacity is in the range of from 6 to 30 milliequivalents per 100 gram. When this capacity exceeds the upper limit of 260 milliequivaleats per 100 gram, it proves difficult to finely disperse the clay on a molecular level because of the strong mutual interaction of the clay fibers. When the cation exchange capacity is lower than the above lower limit, it turns out that the clay is hard to modify, owing to the fact that the interaction with the block copolymer or graft copolymer is small. There is preferably used a clay having a cation exchange capacity of from 25 to 200 milliequivalents per 100 gram.

The polymeric matrix present in a nanocomposite material according to the invention can be formed by the polymeric material defined in claim 1. Both homopolymers and copolymers may serve as polymeric matrix. It is one of the advantages of the invention that by selecting the block copolymer or the graft copolymer the polymeric matrix can be modified with a clay of the above-deecribed nature. Accordingly, by providing the right constituents, e.g. in the form of a kit, the skilled worker is afforded an opportunity to prepare for any desired use a combination of a specific clay and a specific polymeric material, and thus a desired nanocomposite material.

Polymeric materials suitable as polymeric matrix in a nanocomposite material according to the invention are both polyadducts and polycondensates.

The polymeric matrix is selected from the group consisting of polyolefins, vinyl polymers, polyesters, polyethers, polysiloxanes and acrylic polymers. The properties of these materials show a substantial improvement due to the presence of a clay.

Besides on the clay described before and the polymeric matrix, a nanocomposite material according to the invention is based on a block copolymer or a graft copolymer. This block copolymer or graft copolymer is a polymer comprising first structural units (A), which are compatible with the clay, and one or more second structural unite (B), which are compatible with the polymeric matrix. When the structural units occur in a straight polymeric chain, reference is made to a block copolymer. When the structural units (A) occur in a chain which is a branch of the chain in which the structural units (B) occur, or vice versa, reference is made to a graft copolymer.

The structural units (A) are compatible with the clay. By this is meant that these units in themselves, i.e. not in the copolymeric form with the structural units (B), are excellently mixable with the clay. The structural units (A) are preferably of a hydrophilic nature. The material for the one or more structural units (A) is chosen from the group consisting of polyvinyl pyrrolidone, polyvinyl alcohol, polyethylene oxide, liner or dendritic polyethylenimine, polyoxymethylene, polytetrahydrofuran, polyacrylic acid, polymethacrylic acid, polydimethylacrylamide, polymethylacrylamide, copolymers of acrylic acid or methacrylic acid and acrylamide, polyisopropylamide, starch, polysaccharides and cellulose derivatives. It is preferred that at least one of the structural units (A) is derived from monomeric units selected from the group of vinylpyrrolidone, vinyl alcohol, ethylene oxide, ethylenimine, vinylpyridine, acrylic acid and acrylamide. These preferred units (A) are excellently compatible with a clay.

Very suitable materials for use as structural units (A) have a molecular weight of from 100 to 6,000, preferably from 1,000 to 3,000. The material of the structural units (A) contains from 5 to 20 monomeric units.

The structural units (B) are compatible with the polymeric matrix. By this is meant that these units in themselves, i.e. not in the copolymeric form with the structural units (A), are excellently mixable with the material of the polymeric matrix. It is also possible that the nature of the structural units (B) is the same as the nature of the polymeric matrix. An example is a polymeric matrix of polyethylene having a molecular weight of 6,000 and structural units (B) of polyethylene having a molecular weight of 2,500. It is even possible that the material of the polymeric matrix is exactly equal to that of the structural units (B). In the above example, the structural units (B) could then be of polyethylene having a molecular weight of 5,000.

The nature of the structural units (B) will depend on the nature of the polymeric matrix. The material for the one or more structural units (B) is chosen from the group consisting of polyolefins, such as polyethylene or polypropylene, vinyl polymers, such as polystyrene or polymethyl methacrylate, polyesters, such as polyethylene terephthalate or polycaprolactone, polycarbonates, polyaryl ethers, polysulfones, polysulfides, polyamides, polyetherimides, polyether esters, polyether ketones, polyether eater ketones, polyvinyl chloride, polyvinylidene chloride, polyvinylidene fluoride, polysiloxanes, polyurethanes and polyepoxides. There are preferably used polyolefins, vinyl polymere, polyesters, polyethers, polysiloxanes or acrylic polymers.

According to a preferred embodiment, a block copolymer or a graft copolymer is used in which the structural unite (A) contain from 5 to 20 monomeric units and the structural units (B) contain the same or a larger amount of monomeric units as/than the structural unite (A). It has been found that with such a block copolymer or graft copolymer a very finely divided homogeneous dispersion of the clay is obtained in the polymeric matrix.

In a nanocomposite material according to the invention, the weight ratio of the amount of block copolymer or graft copolymer to the amount of clay is between 0.01:1 and 100:1, with a special preference between 0.05:1 and 6:1. The weight ratio of the amount of clay to the amount of polymeric matrix is between 1:200 and 2: 1, with a special preference between 1:50 and 1.2: 1.

The invention further relates to a process for preparing a nanocomposite material as described above. It should be noted that it is possible in this connection to first bring together the clay and the block copolymer or graft copolymer or first bring together the polymeric matrix and the block copolymer or graft copolymer and only then add the required third constituent. It is further possible to simultaneously bring together all the three required constituents, namely clay, polymeric matrix and block copolymer or graft copolymer.

It is preferred, however, to first modify the clay with a block copolymer or graft copolymer of the above-described nature. The invention therefore also discloses a modified clay suitable for preparing a nanocomposite material as described above, based on a clay having a fibrous structure and a cation exchange capacity of from 5 to 250 milliequivalents per 100 gram, which clay is modified with a block copolymer or a graft copolymer, which block copolymer or graft copolymer comprises one or more first structural units (A), which are compatible with the clay, and one or more second structural units (B). This modified clay can then be suitably mixed with a polymeric matrix. By suitably selecting the structural unite (B), a skilled worker is capable of including a clay in a polymeric matrix of any desired nature.

When preparing a nanocomposite material according to the invention, in any of the above-mentioned sequences of bringing together, it is preferred to grind or pulverize the clay previously. Such a pretreatment of the clay results in an easier and better mixability of the different constituents.

The constituents of a nanocomposite material according to the invention may be brought together in any suitable manner, provided this manner gives a good mixture. Examples of methods of bringing together the constituents comprise agitation for a longer period of time at elevated temperature and extrusion. Suitable mixing conditions depend on the nature of the selected constituents and can be easily determined by a skilled worker. The agitation may be carried out, e.g., at a temperature between 40 and 80°C and the extrusion, e.g., between 40 and 150°C in a twin-screw extruder.

The nanocomposite materials according to the invention may be very suitably used for a great diversity of applications. The materials are excellently processable and can be molded in conventional molding steps, such as injection molding and extrusion processes. Molded articles of different nature can be prepared from the present nanocomposite material. Examples comprise any application for which the material of the polymeric matrix is suitable. As preferred applications, packaging and construction materials may be mentioned.

The invention will now be explained in more detail with reference to the following examples.

### Examples

### Materials

Nanocomposites based on semicrystalline as well as on amorphous polymer matrices have been prepared. Polyethylene nanocomposites were produced using HDPE8621, a commercial grade from DSM. Isotactic polypropylene DM55 (IPP) was supplied by Borealis, Ausria. The PMMA VO55 was obtained from Atofina, France. Caprolactam was used to synthesize PA6. The organic cations used in ion exchange reactions are dioctadecyldimethylammonium bromide (DODAB) or dihexylamine (DHA), both purchased from Sigma-Aldrich Co. Polyethylene grafted with 1.6% maleic anhydrite (PE-g-MA) was also supplied from Sigma-Aldric Co.

The block-copolymers EBE 55, which has molecular weight Mw of 8000 g/mol and consists of 4.3 kg/mol PEO and 3.7 kg/mol PBh and ME1010 with molecular weight Mw=2000 that consists from PMMA and PEO block in composition1000:1000 were supplied from Goldschmid AG, Germany.

The clays used are sepiolite B20 supplied by Tolsa SA, Spain and attapulgite from Milwhite Corporation, USA. These are natural clays that belong to the mineral class of pseudo-layer silicates. The ideal general chemical formula of sepiolite is Si₁₂Mgs₈O₃₀₂(OH)₂(H₂O)₄ .8H₂O. This mineral has specific gravity of 2 g/cm³ and cation exchange capacity (CEC) of 25 meqv / 100 g. The diameter of the fibrils is approximately 30 nm, their length can range reach up to few microns. The fibrils consist of mosaic arrangement of trioctahedral layers and open channels, both extended in the fibril direction. The general chemical formula of attapulgite is (Mg,Al)₂Si₄O₁₀(OH) 4 H₂O. Its structure is very similar to the structure of sepiolite. The differences are that the unit cell of the octahedral layers is smaller and the open channels a narrower. Attapulgite has specific gravity of 2.2 kg/m and ion exchange capacity of 15meqv/100g.

### Materials preparation: clay surface modification

The procedure for surface modification of fibrous clays is as follows: Ion exchange reaction was performed with the non-reactive surfactants DODAB or DHA. The clay (5 g) and the surfactant (10 g) were added to 2000 ml warm water and stirred until a homogeneous mixture is obtained. Then the clay was filtrated and washed several times with warm water. After the final filtration the resulting precipitate was freeze-dried. Additional treatment was applied when the clay was prepared for producing PA6 nanocomposites using reactive disaggregation method.

Aqueous suspension (200 ml) of the clay (5 g) and α,ω-aminoundecanoic acid (0.5 g) was stirred for three hours at 80 °C. The precipitate was washed with warm water and freeze-dried.

### Materials preparation: nanocomposites preparation

### a. reactive disaggregation

This method was applied for preparation of PA6 nanocomposites. The whitish powder of the with α,ω-aminoundecanoic acid modified attapulgite was mixed with 90 g caprolactam and 10 ml water and heated slowly under stirring in dry nitrogen atmosphere to 260 °C. After 6 hours polycondensation time a transparent melt of PA6 nanocmposites was formed.

### b. incorporation trough extrusion melt mixing

Typical procedure for incorporation of fibrous minerals by melt extrusion is as follows: The materials were prepared using a 15 cm³ co-rotational twin-screw extruder Xplore (DSM). The materials were mixed for 10 min with rotational speed of the screws 245 rpm. Nanocomposites based on HDPE matrix have been prepared using PB-graft-MA as coupling agent. A range of samples containing different amount of clay were prepared.

The weight fraction ratio between the fillet and the coupling agent was kept at constant value 1:2. The HDPE, the compatibilizer and the organically modified sepiolite were fed simultaneously in the extruder and mixed at 180 °C. For polypropylene the block co-polymer EBE δδ was used as a coupling agent. One weight fraction of thin block co-polymer was mixed with three weight fractions of the fibrous clay. An appropriate amount of this mixture, corresponding to desired clay ciontent was mixed with the matrix in the extruder at 170 °C. The same incorporation procedure was applied to manufacture PMMA nanocomposites where ME1010 block copolymer was used as compatibilizer. The complete list of the prepared nanocomposite samples is given in Table 1.

**Table 1**

| | Sepiolite wt.% | Attapulgite wt.% | PE-g-MA wt.% | PMMA-b PEO wt.% | PEB-b-PEO wt.% | DODAB wt.% | DHA wt.%. |
|---|---|---|---|---|---|---|---|
| HDPE^{*} | - | - | - | - | - | - | - |
| HDPE^{*} | 1 | - | 2 | - | - | + | - |
| HDPE^{*} | 2.6 | - | 4 | - | - | + | - |
| HDPE^{*} | 5 | - | 10 | - | - | + | - |
| HDPE^{*} | 10 | - | 20 | - | - | + | - |
| HDPE^{*} | 16 | - | 30 | - | - | + | - |
| HDPE^{*} | 20 | - | 40 | - | - | + | - |
| | | | | | | | |
| PMMA^{*} | - | - | - | - | - | - | |
| PMMA^{**} | 6 | - | - | 1.7 | - | - | - |
| PMMA^{**} | 6 | - | - | 1.7 | - | - | + |
| PMMA^{**} | - | 6 | - | 1.7 | | - | - |
| PMMA^{**} | - | 6 | - | 1.7 | - | - | + |
| | | | | | | | |
| PA6^{*} | - | - | - | - | - | - | - |
| PA6^{*} | - | 10 | - | - | - | + | - |
| | | | | | | | |
| IPP^{*} | - | - | - | - | - | - | - |
| IPP^{*} | - | 5 | - | - | 1.7 | - | + |

| | | | | | | | |
|---|---|---|---|---|---|---|---|
| ^{*} Comparative ^{**} Inventive | | | | | | | |

## Claims

1. A nanocomposite material on the basis of a clay having a fibrous structure and a cation exchange capacity of from 5 to 250 milliequivalents per 100 gram, a polymeric matrix selected from the group consisting of polyolefins, vinyl polymers, polyesters, polyethers, polysiloxanes and acrylic polymers; and a block copolymer or a graft copolymer, which block copolymer or graft copolymer comprises one or more first structural units (A), which are compatible with the clay, wherein the structural units (A) contain from 5 to 20 monomeric units, and one or more second structural units (B), which are compatible with the polymeric matrix, wherein the structural units (B) contain the same or a larger amount of monomeric units as/than the structural units (A),
wherein material for the one or more first structural units (A) is chosen from the group consisting of polyvinyl pyrrolidone, polyvinyl alcohol, polyethylene oxide, linear or dendritic polyethylenimine, polyoxymethylene, polytetrahydrofuran, polyacrylic acid, polymethacrylic acid, polydimethylacrylamide, polymethylacrylamide, copolymers of acrylic acid or methacrylic acid and acrylamide, polyisopropylamide, starch, polysaccharides and cellulose derivatives,
wherein material for the one or more second structural units (B) is chosen from the group consisting of polyolefins, vinyl polymers, polyesters, polycarbonates, polyaryl ethers, polysulfones, polysulfides, polyamides, polyetherimides, polyether esters, polyether ketones, polyether ester ketones, polyvinyl chloride, polyvinylidene chloride, polyvinylidene fluoride, polysiloxanes, polyurethanes and polyepoxides,
wherein the weight ratio of the amount of block copolymer or graft copolymer to the amount of clay is between 0.01:1 and 100:1, preferably between 0.05:1, and 6:1, and wherein the weight ratio of the amount of clay to the amount of polymeric matrix is between 1:200 and 2:1, preferably between 1:50 and 1.2: 1.

2. A nanocomposite material according to claim 1, wherein the clay has a cation exchange capacity of from 25 to 200 milliequivalents per 100 gram.

3. A nanocomposite material according to claim 1 or 2, wherein the clay is a sepioloite, attapulgite or palygorskite.

4. A nanocomposite material according to any of claims 1-3, wherein at least one of the structural units (A) is derived from monomeric units selected from the group of vinylpyrrolidone, vinyl alcohol, ethylene oxide, ethylenimine, acrylic acid and acrylamide.

5. A process for preparing a nanocomposite material according to any of claims 1-4, wherein a clay having a fibrous structure and a cation exchange capacity of from 5 to 250 milliequivalents per 100 gram, a polymeric matrix selected from the group consisting of polyolefins, vinyl polymers, polyesters, polyethers, polysiloxanes and acrylic polymers; and a block copolymer or a graft copolymer, which block copolymer or graft copolymer comprises one or more first structural units (A), wherein the structural units (A) contain from 5 to 20 monomeric units, which are compatible with the clay, and one or more second structural units (B), which are compatible with the polymeric matrix, are mixed together, wherein the structural units (B) contain the same or a larger amount of monomeric units as/than the structural units (A), wherein material for the one or more first structural units (A) is chosen from the group consisting of polyvinyl pyrrolidone, polyvinyl alcohol, polyethylene oxide, linear or dendritic polyethylenimine, polyoxymethylene, polytetrahydrofuran, polyacrylic acid, polymethacrylic acid, polydimethylacrylamide, polymethylacrylamide, copolymers of acrylic acid or methacrylic acid and acrylamide, polyisopropylamide, starch, polysaccharides and cellulose derivatives,
and wherein material for the one or more second structural units (B) is chosen from the group consisting of polyolefins, vinyl polymers, polyesters, polycarbonates, polyaryl ethers, polysulfones, polysulfides, polyamides, polyetherimides, polyether esters, polyether ketones, polyether ester ketones, polyvinyl chloride, polyvinylidene chloride, polyvinylidene fluoride, polysiloxanes, polyurethanes and polyepoxides.

## Patentansprüche

1. Nanokompositmaterial auf Basis von Ton mit fasriger Struktur und Kationenaustauschkapazität von 5 bis 250 Milli-equivalenten pro 100 g, einer polymeren Matrix ausgewählt aus der Gruppe bestehend aus Polyolefinen, vinylpolymeren, Polyestern, Polyethern, Polysiloxanen und acrylischen Polymeren, und einem Blockcopolymer oder eine Pfropfcopolymer, wobei das Blockcopolymer oder Pfropfcopolymer eine oder mehrere erste Struktureinheiten (A), die mit dem Ton verträglich sind, wobei die Struktureinheiten (A) 5 bis 20 monomere Einheiten enthalten, und einne oder mehrere zweiten Struktureinheiten (B) umfaßt, die mit der polymeren Matrix verträglich sind, wobei die Struktureinheiten (B) die gleiche oder eine größere Menge an monomeren Einheiten enthalten wie/als die Strukturenheiten (A),
wobei Material für die eine oder mehreren ersten Struktureinheiten (A) aus der Gruppe bestehend aus Pvlyvinylpyrrolidon, Polyvinylalkohol, Polyethylenoxid, linearem oder dendritischem Polyethylenimin, Polyoxymethylen, Polytetrahydrofuran, Polyacrylsäure, Polymethacrylsäure, Polydimethylacrylamid, Polymethylacrylamid, Copolmyeren von Acrylsäure oder Methacrylsäure und Acrylamid, Polyisopropylamid_{,} Stärke, Polysacchariden und zellulosederivaten ausgewählt ist,
wobei Material für die eine oder mehreren zweiten Struktureinheiten (B) aus der Gruppe bestehend aus Polyolefinen, Vinylpolymeren, Polyestern, Polycarbonaten, Polyarylethern, Polysulfonen, Polysulfiden, Polyamiden Polyetherimiden, Polyetherestern, Polyetherketonen, Polyetheresterketonen, Polyvinylchlorid, Polyvinylidenchlorid, Polyvinylidenfluorid, Polysiloxanen, Polyurethanen und Polyepoxiden ausgewählt ist,
wobei das Gewichtsverhältnis der Menge an Blockcopolymer oder Pfropfcopolymer zu der Menge an Ton 0,01:1 bis 100:1 vorzugsweise 0,05:1 bis 6:1 beträgt, und wobei das Gewichtsverhältnis der Menge an Ton zu der Menge an polymerer Matrix von 1:200 bis 2:1, vorzugsweise 1:50 bis 1,2:1 beträgt.

2. Nanokompositmaterial nach Anspruch 1, bei dem der Ton eine Kationenaustauschkapazität von 25 bis 200 Milliequivalenten pro 100 g aufweist.

3. Nanokompositmaterial nach Anspruch 1 oder 2, bei dem der Ton ein Sepioloit, Attapulgit oder Palygorskit ist.

4. Nanokompositmaterial nach einem der Ansprüche 1 bis 3, bei dem mindestens eine der Struktureinheiten (A) sich von monomeren Einheiten ableitet, die ausgewählt sind aus der Gruppe bestehend aus Vinylpyrrolidon, Vinylalkohol, Ethylenoxid, Ethylenimin, Acrylsäure und Acrylamid.

5. Verfahren zur Herstellung eines Nanokompositmaterials gemäß einem der Ansprüche 1 bis 4, bei dem Ton mit fasriger Struktur und einer Kationenaustauschkapazität von 5 bis 250 Milliequivalenten pro 100 g, eine polymere Matrix ausgezählt aus der Gruppe bestehend aus Polyolefinen, Vinylpolymeren, Polyestern, Polyethern, Polysiloxanen und acrylischen Polymeren und ein Blockcopolymer oder Pfropfcopolymer, wobei das Blockcopolymer oder Pfropfcopolymer eine oder mehrere erste Struktureinheiten (A), wobei die Struktureinheit (A) 5 bis 20 Monomere Einheiten enthalten, die mit dem Ton verträglich sind, und eine oder mehrere zweite Struktureinheiten (B) umfasst, die mit der polymeren Matrix verträglich sind, miteinander gemischt werden, wobei die Struktureinheiten (B) die gleiche oder eine größere Menge an monomeren Einheiten enthält wie/als die Struktureinheiten (A), wobei Material für die eine oder mehreren ersten Struktureinheiten (A) ausgewählt ist aus der Gruppe bestehend Polyvinylpyrrolidon, Polyvinylalkohol, Polyethylenoxid, linearem oder dendritischem Polyethylenimin, Polyoxymethylen, Polytetrahydrofuran, Polyacrylsäure, Polymethacrylsäure, Polydimethylacrylamid, Polymethylacrylamid, Copolymeren von Acrylsäure oder Methacrylsäure und Acrylamid, Polyisopropylamid, Stärke, Polysacchariden und Zellulosederivaten,
und wobei Material für die eine oder mehreren zweiten Struktureinheiten (B) ausgewählt ist aus der Gruppe bestehend aus Polyolefinen, Vinylpolymeren, Polyestern, Polycarbonaten, Polyarylethern, Polysulfonen, Polysulfiden, Polyamiden, Polyetherimiden, Polyetherestern, Polyetherketonen, Polyetheresterketonen, Polyvinylchlorid, Polyvinylidenchlorid, Polyvinylidenflourid, Polysiloxanen, Polyurethanen und Polyepoxiden.

## Revendications

1. Matériau nanocomposite à base d'une argile ayant une structure fibreuse et une capacité d'échange de cations allant de 5 à 250 milliéquivalents pour 100 grammes, d'une matrice polymère choisie dans le groupe constitué par des polyoléfines, des polymères vinyliques, des polyesters, des polyéthers, des polysiloxanes et des polymères acryliques ; et un copolymère à blocs ou un copolymère greffé, lequel copolymère à blocs ou copolymère greffé comprend un ou plusieurs premiers motifs structurels (A) qui sont compatibles avec l'argile, les motifs structurels (A) contenant de 5 à 20 motifs monomères, et un ou plusieurs deuxièmes motifs structurels (B) qui sont compatibles avec la matrice polymère, les motifs structurels (B) contenant une quantité de motifs monomères égale ou supérieure à celle des motifs structurels (A),
dans lequel le matériau pour le ou lesdits premiers motifs structurels (A) est choisi dans le groupe constitué par la polyvinylpyrrolidone, l'alcool polyvinylique, le polyoxyde d'éthylène, la polyéthylène imine linéaire ou dendritique, le polyoxyméthylène, le polytétrahydrofurane, l'acide polyacrylique, l'acide polyméthacrylique, le polydiméthylacrylamide, le polyméthylacrylamide, des copolymères d'acide acrylique ou méthacrylique et d'acrylamide, le polyisopropylamide, l'amidon, des polysaccharides et des dérivés de cellulose,
dans lequel le matériau pour le ou lesdits deuxièmes motifs structurels (B) est choisi dans le groupe constitué par des polyoléfines, des polymères vinyliques, des polyesters, des polycarbonates, des polyaryléthers, des polysulfones, des polysulfures, des polyamides, des polyéther imides, des polyéther esters, des polyéther cétones, des polyéther ester cétones, le polychlorure de vinyle, le polychlorure de vinylidène, le polyfluorure de vinylidène, des polysiloxanes, des polyuréthanes et des polyépoxydes,
dans lequel le ratio en poids de la quantité de copolymère à blocs ou de copolymère greffé sur la quantité d'argile se situe dans la plage de 0,01:1 à 100:1, de préférence de 0,05:1 à 6:1, et
dans lequel le ratio en poids de la quantité d'argile sur la quantité de matrice polymère se situe dans la plage de 1:200 à 2:1, de préférence de 1:50 à 1.2:1.

2. Matériau nanocomposite selon la revendication 1, dans lequel l'argile a une capacité d'échange de cations allant de 25 à 200 milliéquivalents pour 100 grammes.

3. Matériau nanocomposite selon la revendication 1 ou la revendication 2, dans lequel l'argile est une sépiolite, une attapulgite ou une palygorskite.

4. Matériau nanocomposite selon l'une quelconque des revendications 1 à 3, dans lequel l'un au moins des motifs structurels (A) est dérivé de motifs monomères choisis dans le groupe constitué par la vinylpyrrolidone, l'alcool vinylique, l'oxyde d'éthylène, l'éthylène imine, l'acide acrylique et l'acrylamide.

5. Procédé de préparation d'un matériau nanocomposite selon l'une quelconque des revendications 1 à 4, dans lequel on mélange les uns avec les autres une argile ayant une structure fibreuse et une capacité d'échange de cations allant de 5 à 250 milli- équivalents pour 100 grammes, une matrice polymère choisie dans le groupe constitué par des polyoléfines, des polymères vinyliques, des polyesters, des polyéthers, des polysiloxanes et des polymères acryliques ; et un copolymère à blocs ou un copolymère greffé, lequel copolymère à blocs ou copolymère greffé comprend un ou plusieurs premiers motifs structurels (A) qui sont compatibles avec l'argile, les motifs structurels (A) contenant de 5 à 20 motifs monomères, et un ou plusieurs deuxièmes motifs structurels (B) qui sont compatibles avec la matrice polymère, les motifs structurels (B) contenant une quantité de motifs monomères égale ou supérieure à celle des motifs structurels (A),
dans lequel le matériau pour le ou lesdits premiers motifs structurels (A) est choisi dans le groupe constitué par la polyvinylpyrrolidone, l'alcool polyvinylique, le polyoxyde d'éthylène, la polyéthylène imine linéaire ou dendritique, le polyoxyméthylène, le polytétrahydrofurane, l'acide polyacrylique, l'acide polyméthacrylique, le polydiméthylacrylamide, le polyméthylacrylamide, des copolymères d'acide acrylique ou méthacrylique et d'acrylamide, le polyisopropylamide, l'amidon, des polysaccharides et des dérivés de cellulose,
et dans lequel le matériau pour le ou lesdits deuxièmes motifs structurels (B) est choisi dans le groupe constitué par des polyoléfines, des polymères vinyliques, des polyesters, des polycarbonates, des polyaryléthers, des polysulfones, des polysulfures, des polyamides, des polyéther imides, des polyéther esters, des polyéther cétones, des polyéther ester cétones, le polychlorure de vinyle, le polychlorure de vinylidène, le polyfluorure de vinylidène, des polysiloxanes, des polyuréthanes et des polyépoxydes.
